# EUROPEAN PATENT APPLICATION

(11) **EP 1 339 015 A1**
(43) Date of publication of application: **27.08.2003**
(21) Application number: 02251156.2
(22) Date of filing: 20.02.2002
(51) Int. Cl.: G06K 19/077, G08B 13/14, G06K 7/00

(54) **A radio frequency identification tag location system**

(71) Applicant: Winter, Carolyn Marie, London SW12 8TL (GB)
(72) Inventor: Winter, Carolyn Marie, London SW12 8TL (GB)
(74) Representative: Finnie, Peter John

(57) **Abstract**

In the present invention, a radio frequency identification (RFID) tag location system comprises a base station having a radio frequency (RF) transmitter and a number of RFID tags each having an RF receiver. Each RFID tag stores a tag identifier and the base station is able to accept and store a user input tag identifier for each of the RFID tags. In response to a user input, the base station pages a particular RFID tag by transmitting an RF signal encoded using the respective tag identifier for that RFID tag. Each RFID tag includes a signal generator that, in response to being paged by the encoded RF signal, outputs a sensory signal capable of detection by a human, for indicating the location of the tag.

## Description

### Background to the Invention

Radio frequency identification (RFID) tag systems are well known in the art and are used in identification, location and tracking of people, animals and objects. For example, RFID tag systems are used in document tracking systems.

An RFID tag is an electronic device that generally incorporates a unique identification number, where the number may be "read" by an interrogating radio frequency (RF) transceiver system. RF tags, sometimes described as transponders, may be active, ie battery powered, or passive, ie acquiring energy from the incident RF field. When a transceiver transmits a coded RF signal, if a particular tag's identification number is the same as that encoded on the incident RF field, then the tag is activated and, in response, modulates the incident RF field. The modulated signal is detected by the transceiver and in known document tracking systems this modulated signal is used to determine the location of the document to which the tag is attached.

Known RFID tags are relatively expensive and require sophisticated systems to support any location finding function associated with detecting the response of a particular tag to an incident RF field. It would be desirable to provide an inexpensive RFID tag that could be used for locating everyday objects, particularly in the home or at work, without the need for a supporting network of location finding transceivers. Such an RFID tag could then be marketed to a much wider group of consumers

### Summary of the Invention

According to the first aspect of the present invention, a radio frequency identification (RFID) tag location system, comprises a basestation having a radio frequency (RF) transmitter and a number of RFID tags each having an RF receiver, the or each RFID tag storing a respective tag identifier, the basestation being adapted to accept and store a plurality of user input tag identifiers for a number of RFID tags and subsequently, in response to a user input, page a particular RFID tag by transmitting an RF signal encoded using the respective tag identifier for that RFID tag, wherein the or each RFID tag includes a signal generator that, in response to being paged by an appropriately encoded RF signal, outputs a sensory signal capable of detection by a human.

According to a second aspect of the present invention, an RFID tag for use in the system according to the first aspect of the present invention, comprises:
a stored tag identifier;
an RF receiver circuit for decoding a received RF signal to identify whether or not the RF signal is encoded using the tag identifier; and,
a signal generator coupled to the RF receiver circuit that outputs a sensory signal capable of detection by a human if the received RF signal is determined to be encoded using the tag identifier.

According to a third aspect of the present invention, a basestation for use in the system according to the first aspect of the present invention, comprises:
means for accepting and storing a plurality of user inputs associating a tag identifier with a particular object;
means for accepting a user input selecting a tag identifier from those stored by the basestation; and,
an RF transmitter circuit for transmitting an RF signal encoded using a user selected tag identifier.

According to a fourth aspect of the present invention, a method of locating an object to which a radio frequency identification (RFID) tag is attached, comprises the step of transmitting an RF signal encoded using a tag identifier associated with the RFID tag, thereby causing the RFID tag to respond by outputting a sensory signal capable of detection by a human.

The present invention provides a system for tagging, either temporarily or permanently, and subsequently locating items, whether they be small or large, around the home, office or any other environment local to a user. The invention is implemented using a transmitter, which may be hand-held by a user, and one or more receivers which have been previously attached by the user to the items, or otherwise embedded by the manufacturer of an item, which they may wish at some future time to easily and quickly locate. The transmitter pages the desired tag by means of a radio frequency transmission and the targeted tag responds to the transmission and so indicates its location in the users environment by emitting a signal. This may be an audio, visual, or tactile (vibration) signal, or a combination of two or more of these.

Preferably, the tags are each programmed and manufactured with a digital codeword. The identification of a tag is represented by a codeword that is of sufficiently large size that the probability of any two tags in a users collection or within the local environment of one or more users having the same identification is statistically small. Preferably, a code that represents the identification of a tag is indelibly marked on a surface of the tag.

Preferably, the tag comprises a loudspeaker which outputs an audio signal. Preferably, the audio signal contains at least two low notes in a varying pattern, and at least two high notes in a varying pattern. Preferably still, the audio signal broadcasts a verbal message.

Preferably, the tag comprises an antenna of small size, for example approximately 25 mm in diameter. Preferably the antenna will be a "patch" antenna, but may also be an array of integrated microwave circuit devices or any other suitable antenna of the desired size for receiving an RF signal at the desired frequency. In a particularly preferred embodiment, the antenna provides an integral cover for a loudspeaker.

The tags may contain their own internal power supply, and additionally or alternatively, the tags may obtain power from the incident radio signal.

Preferably, a surface of the tag includes an adhesive film and release member that allows it to be attached to any item. In addition, or as an alternative, the tag may include other forms of fixtures such as a pin, clip, or VELCRO strip.

Preferably, the basestation is a portable device. Furthermore, it is preferred that the basestation is a stand alone device. The basestation may be incorporated into and be part of a users mobile telephone, an ordinary telephone, whether cordless or otherwise, a computer, whether it be a desktop, a laptop or a PDA. In addition, the basestation may be provided as part of an electronic calculator. Indeed, the basestation may be incorporated into any piece of equipment.

The radio signal transmitted by the basestation may be at a frequency of about 1 MHz, 900 MHz, 1800 MHz, or any other suitable radio frequency in any suitable band or frequencies in which the system has obtained permission to operate. Any one basestation will transmit signals at one radio frequency, but different basestations, whether owned and operated by the same user in his system or by different users in their systems, may transmit signals at different frequencies which may also be in different bands of frequencies.

Preferably, the RFID tag can receive at various frequencies so that it can receive signals from a variety of base stations.

The modulation type used by a basestation to transmit a tag identifier may be amplitude modulation, phase modulation, frequency modulation, or any other type of modulation appropriate to the system. Preferably, the modulation scheme is a pulse code modulation of a single carrier at the radio frequency. The modulation frequency may be any suitable frequency, but typically a modulation frequency of 10-20 Hz would be used.

Preferably, the basestation comprises a display and a keypad for accepting user inputs. Furthermore, it is preferred that the basestation includes at least one solar cell to provide sufficient power to maintain the basestation in a standby mode.

Preferably, the basestation comprises a patch antenna, although any suitable antenna may be used.

In the preferred example, the basestation is substantially the size of a credit card.

### Brief Description of the Drawings

Examples of the present invention will now be described in detail with reference to the accompanying drawings, in which:
Figure 1 is a simplified schematic of an RFID tag locating system in accordance with the present invention;
Figures 2a and 2b show, respectively, a top view and side view of an example of a credit card size basestation for use in the locating system;
Figure 3 shows a simplified cross-section of an example of a patch in accordance with the present invention for use in the locating system; and,
Figures 4 and 5 show examples of the electrical circuitry within a patch.

### Detailed Description

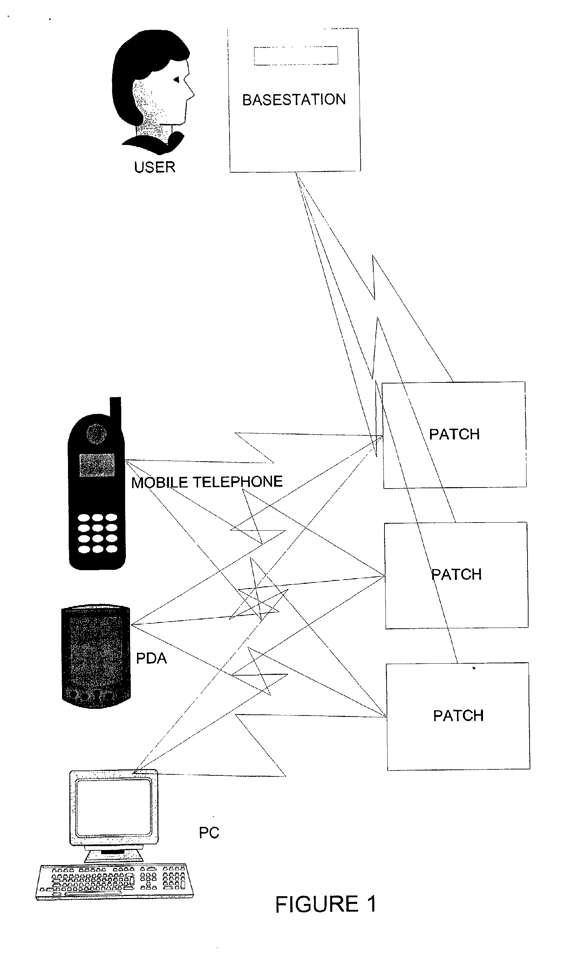

As shown in Figure 1, the present invention provides a system for tagging, either temporarily or permanently, and subsequently locating items, whether they be small or large, around the home, office or any other environment local to a user. The invention is implemented using a transmitter, which may be handheld by the user, and one or more receivers or tags which have been previously attached by the user to the items (or otherwise embedded by a manufacturer of an item) which he may wish at some future time to easily and quickly locate. The transmitter pages the desired tag by means of a radio frequency transmission and the targeted tag responds to the transmission and so indicates its location in the user's environment by emitting a signal. In the examples described below, this signal may be an audio signal or a visual signal, or both.

The system consists of a transmitter, hereinafter referred to as a "basestation", and one or more receiving tags, hereinafter referred to as a "patch". In use, a user attaches individual patches to those items that he may wish to locate, either on a daily basis, such as a child's favourite toy, car keys, cheque books, or wallet, or on a long term basis of several years, such as for important but infrequently accessed documents such as deeds, wills, insurance policies and vehicle registration certificates etc. The patches are attached to the item by virtue of having an adhesive backing, the covering of which may be peeled off and the patch then affixed to the item. As an alternative, or in addition, a patch may have a pin or clip incorporated to allow more permanent fixture to an item, or may be embedded or inserted in an object or affixed to it by a VELCRO strip or other fastening method. The patches are stand alone and do not need to have any wires, cables or any other connections externally whether it be to external power sources or otherwise.

The patches are each programmed at manufacture with a digital codeword for identifying each and every patch electronically and remotely. The identification of each patch is represented by a number which is of sufficiently large size that the probability of two patches, either in a single user's collection or in the local environment of one or more users, having the same identification is statistically small. The number that represents the identification of a patch is indelibly marked on the surface of the patch.

The identification number of each patch is used by the locating system to call or page or otherwise access an individual patch remotely. It is also used by the patch in question to recognise that it is being paged so that the patch may automatically respond appropriately, and so remotely indicate to the user where the patch is located in the user's environment. The length of the digital word which codes the identification for a patch, and which is stored permanently inside the patch and temporarily inside the basestation and used by the basestation to modulate the radio signal, is typically a 16 bit digital word, but may be any other suitable bit length for the system design.

The cost of patches is sufficiently low that an individual user would typically have a quantity of patches in his possession and logged onto his system. There is no reasonable limit to the number of patches that can be placed on an individual user's system, but typically the quantity would be any quantity up to one hundred. Patches can be purchased by the user and added to the system at any time. The user can remove patches from the system at any time.

In the following example, the user has a basestation which is stand alone, self contained, small and lightweight and is typically the size of a credit card. The basestation does not need to have any external connections and is therefore capable of being carried around by the user on his person. However, the basestation may also be a desktop version which is stand alone but which has the facility for connection to a mains power supply. Such a desktop basestation would have greater range in its ability to locate patches than the credit card size basestation, but would not be mobile. As shown in Figure 1, the basestation may also be incorporated into and be part of a user's mobile telephone, an ordinary telephone, whether cordless or otherwise, or his computer, whether it be a desktop, a laptop, an electronic calculator or a PDA. The basestation may also be incorporated into any other piece of equipment in the user's environment where such incorporation is appropriate, and is designed for by the manufacturers of the equipment in question.

The user may have more than one basestation available for use in the system at any one time, in which case each basestation may act independently of the others. A user would typically only operate one basestation at a time when locating patches.

In use, the user accesses via an "Enter" button on his basestation numbered memory positions in his basestation, typically 1 to 99, and enters into a memory position the identification number of a patch together with a label of typically five letters to indicate the item to which a particular patch has been attached. The user does this for all the patches that he wishes to have on his system at any one time or from time to time. The user can change the identifications of patches in the memory positions in his basestation at any time. Thereafter, the basestation, when accessed by the user, shows the user the memory position number and the label he gave to the particular patch. The basestation retains the patch identification but does not display it back to the user unless the user is in "Enter" mode again for that memory position.

The user accesses the remote location function of the system by pressing a "Select" button on his basestation, and then scrolling through the memory positions until he reaches the position for the patch, and therefore the item, that he wishes to locate. The user then presses a "Find" button on his basestation, and alerts himself to the anticipated response, typically an audio response, from the patch. The user may walk around his environment with the basestation in his hand to aid location but this is not essential for the system to function and operate satisfactorily. The user walks to the location in his environment from which the response from the patch is coming, and so locates the item in question. Having done so the user presses a "Stop" button on his basestation and so terminates the location process.

When the "Find" button is pressed, and until the "Stop" button is pressed, the basestation transmits a radio signal which is modulated with the identification of the patch that is to be located. All patches within range of the radio signal receive the modulated signal and demodulate the signal and decode the identification that is being transmitted. All patches that so receive the signal compare the identification that is being transmitted to their own identification that is stored in memory inside the patch. Only the patch whose identification matches the transmitted identification responds to the radio. All other patches, whose identifications do not match ignore the signal and do not respond.

The patch which responds to the signal continues to respond to the signal for as long as the signal is being transmitted by the basestation with the correct identification, that is until such time as the user presses the "Stop" button on his basestation to terminate the location process.

All patches are normally in a standby mode and are ready and able to receive a signal and to demodulate and decode that signal to ascertain whether or not it has the correct identification. Patches do not need to be switched on or otherwise enabled by the user. When a patch is no longer receiving a signal with the correct identification, and therefore is no longer responding to a signal, the patch automatically returns to the standby mode.

The radio signal transmitted by the basestation may be at a frequency of about 1MHz, 900MHz, 1800MHZ, or any other suitable radio frequency in any suitable band of frequencies in which the system has obtained permission to operate. Any one basestation will only transmit signals at one radio frequency, but different basestations, whether owned and operated by the same user in his system or by different users in their systems, may transmit signals at different frequencies which may also be in different bands of frequencies.

The bandwidth of the radio signal transmitted by the basestation is any suitable bandwidth that suits the system design and which meets the appropriate Radio Regulations for the band of frequencies being used by the system. Typically, the bandwidth of the transmitted signal is around 25KHz.

In the preferred example, the patches are able to receive signals across a wide range of frequencies and bands of frequencies and are not frequency selective. They are therefore able to receive signals from more than one basestation even if the basestations are transmitting on different frequencies and in different radio bands. Alternatively, patches may be designed which are frequency selective and which respond to only one band of frequencies or to one small range of frequencies in a band.

The modulation type used by the basestation to transmit the identification for the patch in question may be amplitude modulation, phase modulation, frequency modulation, or any other type of modulation appropriate to the system. The preferred modulation scheme is pulse code modulation (PCM) of a single carrier at the radio frequency. The modulation frequency may be any suitable frequency, but typically a modulation frequency of 10 to 20 Hz may be used.

In operation, the basestation transmits a burst of carrier, for example one second long, to provide power to the patch (assuming it does not have its own internal power supply - see Figure 5) and thereby enable the patch's receiving circuits. The basestation then transmits a pulse code modulation of a 16-bit word at a bit spacing of 50 milliseconds for another second, followed by a continuous transmission of the carrier to keep the circuits in the patch powered and operating while the patch broadcasts an audio signal. The basestation can be arranged to retransmit the code every few seconds.

The output power of the radio signal transmitted by the basestation is typically a few milliwatts to a few hundred milliwatts in the case of the credit card size basestation. The range of the system when using such a basestation is typically 20 metres inside buildings, and 100 metres out of doors, but may be any smaller or greater range that the designer of the system chooses to design for. The output power of the radio signal transmitted by mains powered basestations is typically a few hundred milliwatts to two watts and so the range is correspondingly greater.

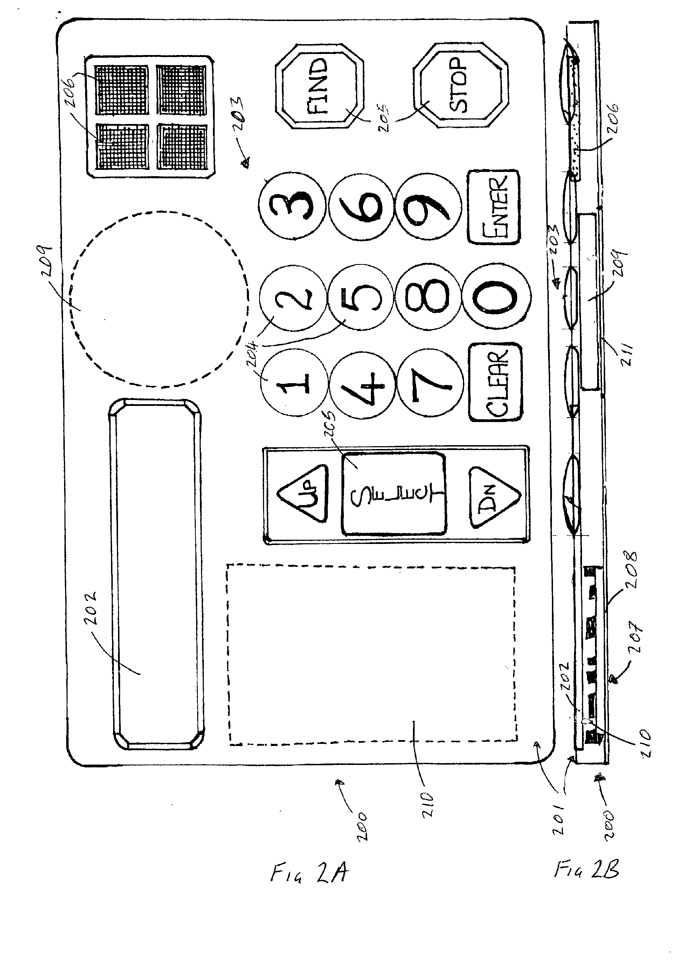

An example of a basestation 200 is shown in more detail in Figures 2a and 2b. This basestation has approximately the same dimensions as a credit card. The front surface 201 of the credit card size basestation 200 constitutes the user interface and contains an 8-digit display 202, a keypad 203 with both numerical 204 and function 205 buttons, and a solar cell 206 or cells 206. The solar cell 206 is sufficient to power all the functions of the basestation except for the radio transmitter. The keypad contains both numerical keys 204 (0 to 9) and a number of function keys 205 such as "Select", "Find", and "Stop" necessary to operate the basestation and use the system.

The rear surface 207 of the basestation 200 contains the antenna 208 for the radio transmissions. It may be any suitable type of antenna but in this example is a "patch" antenna for transmissions at 900 MHz or 1800 MHz and has dimensions 83mm × 52mm.

Internally, the basestation 200 contains a battery 209, RF components 210, and baseband components 210. The RF components consist of an oscillator, a modulator, and a transmitter device. These may be discrete components or RF integrated circuit components or any mixture or combination of the two. The baseband components consist of one or more digital ICs, power management circuits, driver circuits and interface circuits.

The battery 209 is replaceable, and can be easily removed and changed by the user via a removable cover 211 in the rear surface 207 of the basestation. A suitable example is a single flatpack lithium manganese dioxide battery cell such as a Duracell DL-2025 battery. The standby lifetime of the basestation before the battery needs to be changed is several years, and typically 5 years. The transmit or search lifetime of the basestation before the battery needs to be changed is typically 10 hours. Since each "search" has an average duration of perhaps a minute or so the basestation can typically carry out several hundred searches before it becomes necessary to change the battery. Accordingly, except for changing of the battery from time to time, the basestation is maintenance free.

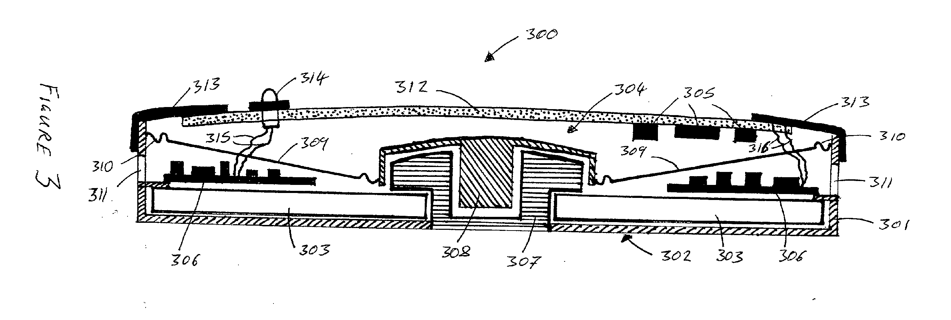

Figure 3 shows an example of a patch 300. The patch is small, lightweight, sealed and self contained. The case 301 of the patch may be covered with a plastic film, a fabric based covering, or any other suitable covering material. The patch may be coloured, and may support a particular design and/or a trademark or logo. The rear surface 302 of the patch 300 includes a suitable fastening mechanism that allows it to be attached to or inserted in any item. Examples of possible fastening mechanisms include an adhesive film with release member, a pin, a clip and a VELCRO strip.

During manufacture, each patch is assigned a random 5-digit number and these numbers are randomly allocated when sets of patches are pre-programmed and packaged together. This number is displayed on a surface of the patch and constitutes the identification for the patch. The chances of any one user having two patches in his collection with the same number are remote. The 16-bit word that identifies a particular patch is permanently burnt into a 16-bit read only memory (ROM) within the patch during manufacture.

Internally, the patch contains all those elements and components necessary for it to function in the system. As shown in Figure 3, the patch contains batteries 303, loudspeaker 304, and RF 305 and other electronic circuitry 306. The internal batteries 303 for powering the patch may be configured in a ring. The loudspeaker electromagnet 307 and armature 308 is centrally located, with a loudspeaker cone 309 extending from the armature to the inside of the patch case, to which it is connected via a flexible connector 310. The side of the patch case may feature holes 311 to aid in the emission of the audio signal.

A patch antenna 312 forms the front face of the patch and additionally provides a loudspeaker cover. The antenna may be slightly domed and takes up the whole of the front surface of the patch but has very little thickness, typically half a millimetre or less. The majority of the volume of the patch is taken up by the loudspeaker which radiates the audio message through the body of the patch, although the rear face will be somewhat muffled by the article to which it is attached. The patch case 301 may feature a flexible attachment 313 to aid vibration of the antenna substrate at audio frequencies. Some or all of the RF components 305 may be mounted on the lower surface of the antenna substrate. The remaining circuitry 306 and integrated circuit chips 306 are mounted on circuit boards located above the batteries.

In addition to the loudspeaker 304, the patch also features an LED 314 to provide a visual signal to the user, thereby further aiding the user in locating the object to which the patch is attached. The LED 314 is mounted on the antenna substrate with electrical connections passing through a hole in the substrate. Electrical connections 315 between the LED and the controlling electronic circuitry can pass through small holes in the loudspeaker cone. Any RF components located on the antenna substrate can be connected to other electronic circuitry in a similar manner 316.

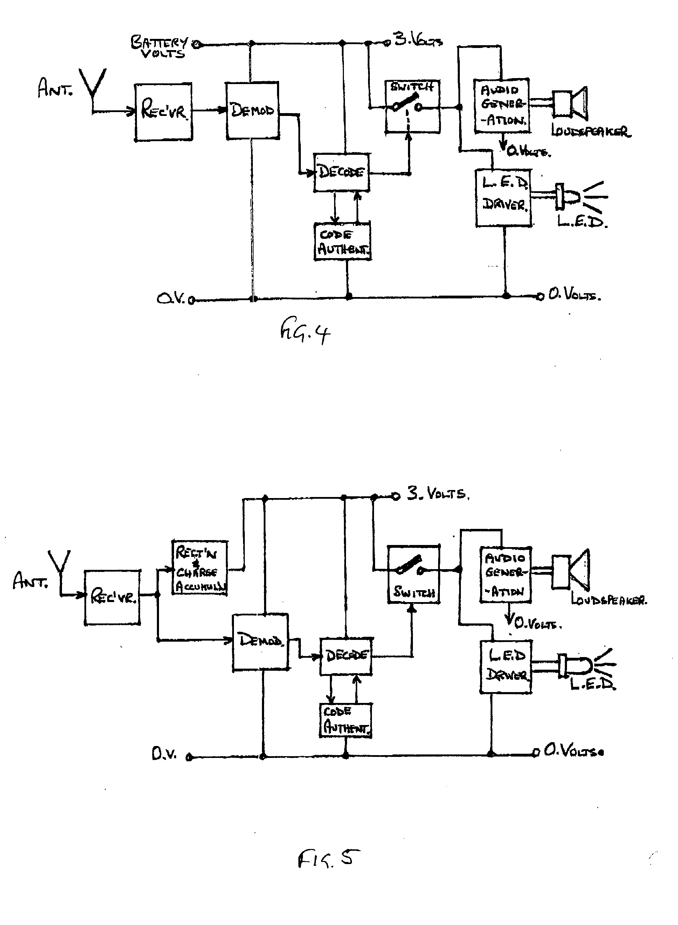

Figures 4 and 5 show more detailed block diagrams of two examples of the RF and other components that would be contained in a patch similar to that shown in Figure 3. Nominally, these consist of an antenna (in this case a patch antenna), an RF receiver, a demodulator, a decoder, a code authentication unit, switches, an audio and/or visual message generating circuit, a light emitting diode, and a loudspeaker. The electronic and RF circuits in the patch are miniaturised and consist of one or more integrated circuit devices. As shown in Figure 4, the patch may contain its own internal power supply in which case the charge storage device is a battery. Typically, this is one or more lithium cells such as a Duracell DL-1620 battery. Alternatively, and as shown in Figure 5, the patch may obtain its power from the incoming radio signal in which case a part of the signal is rectified and charge is stored in a charge storage device, typically one or more capacitors. Patches of both types may exist in the system simultaneously.

The patch has a long standby lifetime, that is the time over which it will function in the system when accessed without the need for maintenance. That standby lifetime is typically five to ten years.

For patches containing their own internal power source the response lifetime, that is the time for which the patch can transmit its audio message before the battery becomes flat, is defined in terms of the number of complete audio messages that the patch can send out. Each audio message typically has a duration of ten seconds and the response lifetime is typically 400 messages. When the patch has delivered this number of audio messages and its battery is flat the user replaces it with a new patch. For patches which obtain their power from the incoming radio signal there is no limit to the response lifetime of the patch, up to the standby lifetime discussed above.

The volume of the audio message radiated by the patch is sufficient to ensure that the patch can be heard and hence located anywhere inside an average house, that is an audio range of typically 15 metres in any direction (assuming an otherwise quiet audio background environment).

It is relatively straightforward to generate quite a sophisticated message using current technology. There are some factors that need to be taken into account that affect the range of the audio signal. Firstly, the human ear is particularly sensitive to changes in pitch. Accordingly, it is preferred that the loudspeaker emits a varying audio signal. Secondly, the human ear is quite selective at around 1 KHz. However, balancing the effects of the sensitivity and selectivity of the ear as a receiver are the effects due to audio transmission properties of air and buildings. A clear path in air is better at transmitting low frequencies over long distance than it is at transmitting high frequencies. Next are the effects due to the transmission properties of sound in buildings. Buildings transmit base notes through walls and floors better than they transmit treble notes. Lastly, however, when you are close to a source of sound in a free air path, then a high pitched treble note will get the ear's attention better than a low pitched base note. This is as a result of the direction finding properties of the human ear. It can instinctively locate and focus attention on a high pitch better than a low pitch. In the present invention, the content of the audio signal should preferably contain low notes, at least two of them in a varying pattern so as to carry as far as possible through walls and floors in the building. It should also contain high notes, and at least two of them in a varying pattern so as to aid location of the item once you are in the same room as the item. Once the frequency content of the audio signal is defined, it is possible to use that audio signal to broadcast a verbal message.

## Claims

1. A radio frequency identification (RFID) tag location system comprising a basestation having a radio frequency (RF) transmitter and a number of RFID tags each having an RF receiver, the or each RFID tag storing a respective tag identifier, the basestation being adapted to accept and store a plurality of user input tag identifiers for a number of RFID tags and subsequently, in response to a user input, page a particular RFID tag by transmitting an RF signal encoded using the respective tag identifier for that RFID tag, wherein the or each RFID tag includes a signal generator that, in response to being paged by an appropriately encoded RF signal, outputs a sensory signal capable of detection by a human.

2. A system according to claims 1, wherein the or each RFID tag is programmed and manufactured with an identifying digital codeword.

3. A system according to claims 1 or 2, wherein a code that represents the identification of an RFID tag is indelibly marked on a surface of the tag.

4. A system according to any preceding claim, wherein the or each RFID tag further comprises a loudspeaker which outputs an audio signal.

5. A system according to any preceding claim, wherein the or each RFID tag further comprises a patch antenna.

6. A system according to claim 5, wherein the patch antenna provides an integral cover for a loudspeaker.

7. A system according to any preceding claim, wherein the or each RFID tag can receive at various frequencies so that it can receive signals from a variety of base stations.

8. A system according to any preceding claim, wherein a surface of the or each RFID tag includes an adhesive film and release member that allows it to be attached to any item.

9. A system according to any preceding claim, wherein the basestation is a portable device.

10. A system according to any preceding claim, wherein the basestation is a stand alone device.

11. A system according to any preceding claim, wherein the basestation uses pulse code modulation of a single carrier at the radio frequency to transmit the tag identifier.

12. A system according to any preceding claim, wherein the basestation includes at least one solar cell to provide sufficient power to maintain the basestation in a standby mode.

13. A system according to any preceding claim, wherein the basestation further comprises a patch antenna.

14. A radio frequency identification (RFID) tag for an RFID location system comprising a:
a stored tag identifier;
an RF receiver circuit for decoding a received RF signal to identify whether or not the RF signal is encoded using the tag identifier; and,
a signal generator coupled to the RF receiver circuit that outputs a sensory signal capable of detection by a human if the received RF signal is determined to be encoded using the tag identifier.

15. A basestation for a radio frequency identification (RFID) location system comprising:
means for accepting and storing a plurality of user inputs associating a tag identifier with a particular object;
means for accepting a user input selecting a tag identifier from those stored by the basestation; and,
an RF transmitter circuit for transmitting an RF signal encoded using a user selected tag identifier.

16. A method of locating an object to which a radio frequency identification (RFID) tag is attached, comprising the step of transmitting an RF signal encoded using a tag identifier associated with the RFID tag, thereby causing the RFID tag to respond by outputting a sensory signal capable of detection by a human.
